# EUROPÄISCHE PATENTANMELDUNG

(11) **EP 1 649 751 A2**
(43) Veröffentlichungstag der Anmeldung: **26.04.2006**
(21) Anmeldenummer: 05021752.0
(22) Anmeldetag: 06.10.2005
(51) Int. Cl.: A21C 7/01

(54) **Langroller**

(30) Priorität: 23.10.2004 DE 102004051683
(71) Anmelder: Werner & Pfleiderer Lebensmitteltechnik GmbH, 91550 Dinkelsbühl (DE)
(72) Erfinder: Meier, Alexander, 91602 Dürrwangen (DE); Mülders, Herbert, 52222 Stolberg (DE)
(74) Vertreter: Hofmann, Matthias

(57) **Zusammenfassung**

Ein Langroller (6) zum Langrollen von Teigstücken weist ein Grundgestell (10) auf, über welches ein Unterband (12) geführt ist. Ein Traggestell (18) dient zur Halterung eines Oberbandes (25). Zwischen Oberband (25) und Unterband (12) ist eine Mehrzahl von Führungsleisten (32) angeordnet, die sich zueinander beabstandet parallel zur Transportrichtung (17) für Teigstücke (2) zwischen der Unterseite des Oberbandes (25) und der Oberseite des Unterbandes (12) erstrecken. Es resultiert ein Langroller, der die Vorteile bisher bekannter Oberbänder mit denen bisher bekannter Druckbrett-Einheiten, die anstelle dieser Oberbänder auch eingesetzt werden, vereint.

## Beschreibung

Die Erfindung betrifft einen Langroller zum Langrollen von Teigstücken nach dem Oberbegriff des Anspruches 1.

Ein derartiger Langroller ist bekannt aus der EP 1 104 650 A1. Der Vorteil dieses Langrollers besteht darin, dass wahlweise mit einem Oberband oder aber auch mit einer Druckbrett-Einheit oberhalb des Unterbandes gearbeitet werden kann, ohne dass hierzu der Langroller in Förderrichtung bautief ausgeführt sein muss. Allerdings ist die Konstruktion des Schwenkrahmens des Langrollers zum alternativen Einschwenken des Oberbandes einerseits oder der Druckbrett-Einheit andererseits aufwändig.

Der Erfindung liegt daher die Aufgabe zu Grunde, einen Langroller der eingangs genannten Art derart weiterzubilden, dass bei konstruktiv geringerem Aufwand zumindest die gleiche Verarbeitungsqualität erzielt wird.

Diese Aufgabe ist erfindungsgemäß gelöst durch die Merkmale des Kennzeichnungsteils des Anspruches 1.

Erfindungsgemäß wurde erkannt, dass die Vorteile eines Oberbandes einerseits und einer Druckbrett-Einheit andererseits miteinander kombiniert werden können, wenn bei einem Oberband die erfindungsgemäßen Führungsleisten vorgesehen sind. Mit diesen Führungsleisten ist eine Seitenführung der langgerollten Teigstücke während des Langrollens möglich, sodass diese sehr definiert langgerollt werden. Gleichzeitig ist eine präzise Schlusslagenkontrolle am Ende des Langrollvorgangs möglich. Zudem wird durch die bewegliche Lauffläche des Oberbandes im Vergleich zu einem Langrollen mit einer Druckbrett-Einheit eine wesentlich verbesserte Produktqualität erzielt.

Da Ober- und Unterband mit unterschiedlicher Geschwindigkeit angetrieben sein können, lässt sich der Rollweg für die langzurollenden Teiglinge je nach herzustellendem Produkt individuell verlängern oder verkürzen. Es resultiert ein Langroller mit den kombinierten Vorteilen von Oberband und Druckbrett-Einheit mit Seitenführung bei im Vergleich zum Stand der Technik wesentlich unaufwändigerer konstruktiver Ausgestaltung.

Eine Anordnung der Führungsleisten nach Anspruch 2 führt zu einer sicheren Seitenführung durch die Führungsleisten.Das Oberband kann zum Beispiel in vier Ober-Einzelbänder unterteilt sein. Auch eine Unterteilung in eine andere Anzahl von Ober-Einzelbändern ist möglich.

Ein Antrieb der Ober-Einzelbänder nach Anspruch 3 ist einfach. Alternativ ist es, z. B. zum gleichzeitigen Langrollen verschiedener Produkte, möglich, die Einzelbänder unabhängig anzutreiben. Schließlich ist es auch möglich, das Oberband indirekt anzutreiben, insbesondere den Antrieb des Oberbandes vom Antrieb des Unterbandes abzuleiten.

Eine Ausgestaltung nach Anspruch 4 erlaubt eine Halterung der Führungsleisten über dem Oberband-Untertrum an einem Oberband-Gehäuse, was die Konstruktion des Langrollers weiter vereinfacht.

Die Ausgestaltungen nach den Ansprüchen 5 und 6 ermöglichen den Einsatz eines höhenverstellbaren Langrollers, bei dem bei jeder Höhen- bzw. Abstandseinstellung zwischen Ober- und Unterband eine sichere Seitenführung durch die Führungsleisten gewährleistet ist. Bei der Ausgestaltung nach Anspruch 6 ist beispielsweise eine Halterung über Langlöcher möglich. Das Oberband kann insbesondere zum Unterband derart relativ höhenverstellbar sein, dass neben zylindrischen auch keilförmige Teiglinge langerollt werden können. Eine solche Keilform ist zum Rollen von Teiglingen mit spitzen Enden, zum Beispiel für Bolillos, vorteilhaft. Die Abstandsvorgabe von Ober- zu Unterband über die Bandbreite kann durch Distanzstifte oder durch Einlegekeile erfolgen.

Ein Ausführungsbeispiel der Erfindung wird nachfolgend an Hand der Zeichnung näher erläutert. In dieser zeigen:
- Fig. 1: eine Rollgebäck-Anlage mit einem Langroller in schematischer Darstellung mit einem Oberband in Arbeitsposition;
- Fig. 2: eine innere Details teilweise im Schnitt zeigende vergrößerte Seitenansicht des Langrollers mit dem Oberband in Ruheposition;
- Fig. 3: eine ebenfalls innere Details teilweise im Schnitt zeigende Seitenansicht gemäß dem Sichtpfeil III in Fig. 2.

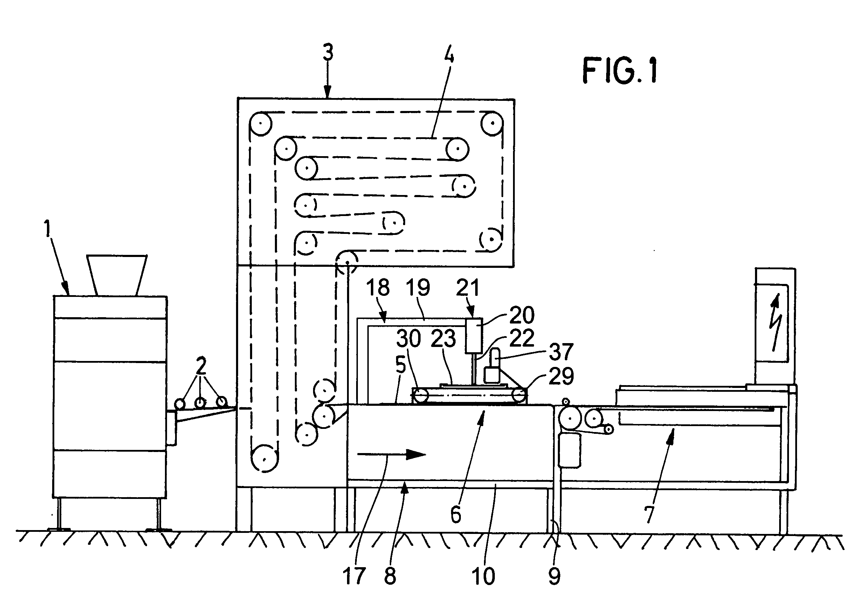

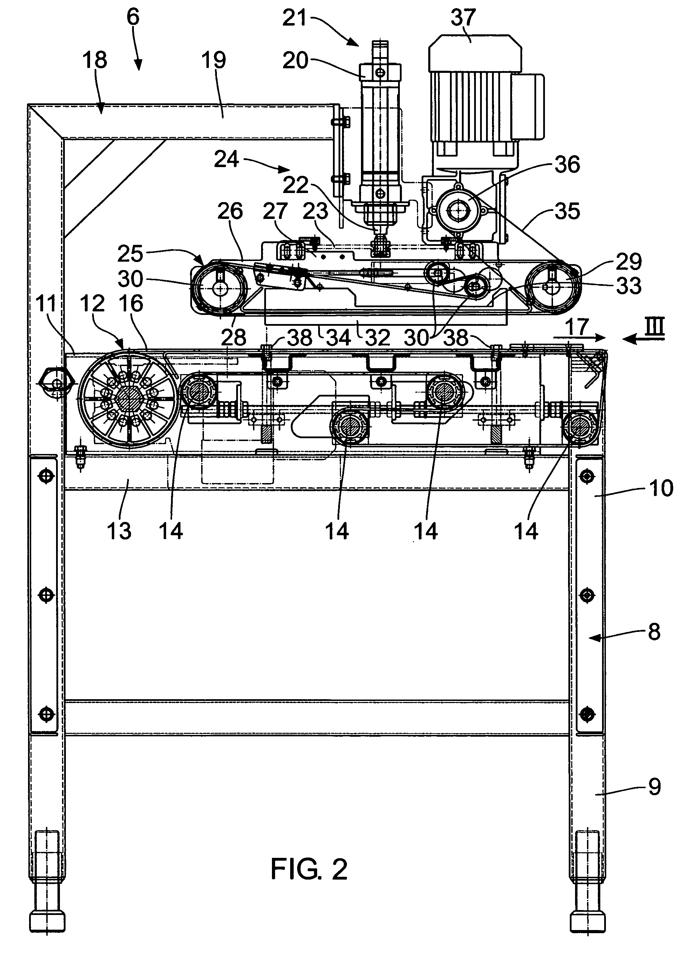

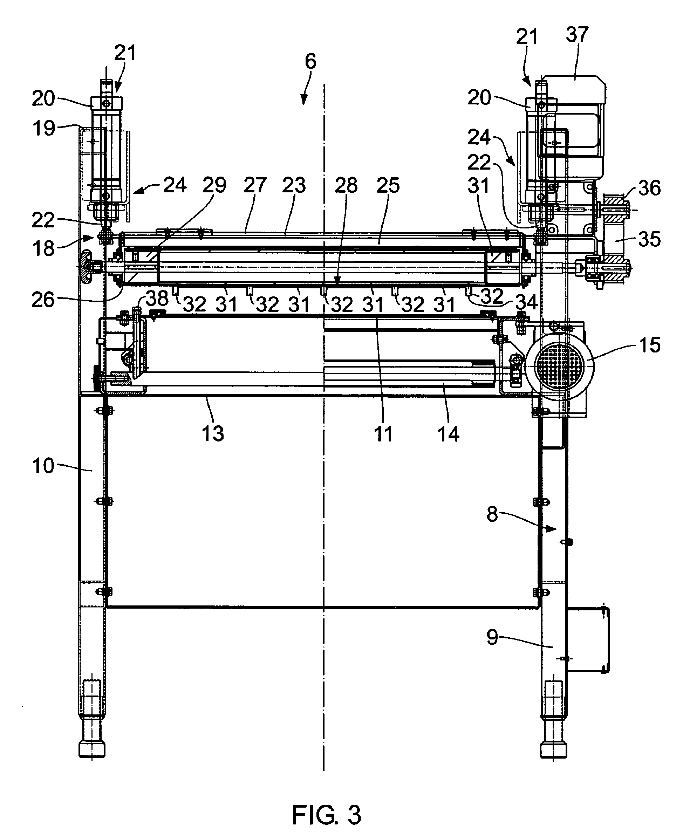

Die in Fig. 1 dargestellte Rollgebäck-Anlage weist eine Teigteil- und Rundwirkmaschine 1 auf, in der in bekannter Weise Teigstücke 2 abgeteilt und in bekannter Weise rundgewirkt werden. Die Teigstücke 2 werden nach dem Rundwirken in einem Gärschrank 3 zugeführt, in dem sie in im Einzelnen nicht dargestellten Gehängen an endlos umlaufenden Ketten 4 umlaufen und einem Gärprozess unterworfen werden. Mittel eines Abtransportbandes 5 des Gärschrankes 3 werden die Teigstücke 2 einem Langroller 6 übergeben, von wo aus sie dann auf eine Ablege-Vorrichtung 7 gelangen. Bei den Teiglingen 2 kann es sich z. B. um zylindrische Teigstücke, um Teigstücke mit spitzen Enden oder um zusammengerollte Teigstücke handeln. Dieser Grundaufbau einer Rollgebäck-Anlage ist üblich und bekannt, soweit es sich nicht um den Aufbau des Langrollers 6 handelt, der im Detail in den Fig. 2 und 3 dargestellt ist.

Der Langroller 6 umfasst einen Maschinenrahmen 8, der sich über Stützfüße 9 am Boden abstützt. Teil des Maschinenrahmens 8 ist ein Grundgestell 10, welches an seiner Oberseite mit einer tischartigen, ebenen Platte 11 versehen ist. Auf dieser Platte 11 ist ein endloses Unterband 12 abgestützt, welches über auf einer Zwischenebene 13 des Grundgestells 10 gelagerten Antriebs- und Umlenkrollen 14 geführt ist, wobei eine der Antriebsrollen 14 über einen Antriebsmotor 15 angetrieben ist. Das Unterband 12 ist über eine von den Umlenkrollen 14 gebildete Band-Spanneinrichtung geführt. Der Antrieb des Unterbandes 12 erfolgt so, dass ein auf der Platte 11 aufliegendes Unterband-Obertrum 16 in Transportrichtung 17 der Teigstücke 2 bewegt wird. Die Transportrichtung 17 wird nachfolgend auch als Laufrichtung bezeichnet.

Ein weiterer Teil des Maschinenrahmens 8 wird von einem Traggestell 18 gebildet, welches zwei galgenartige Ausleger 19 aufweist, die oberhalb der Platte 11 enden. An diesen beiden Enden der Ausleger 19 sind Zylinder 20 je eines Kolben-Zylinder-Hubantriebes 21 angeflanscht. Am freien Ende der Kolben 22 der Kolben-Zylinder-Hubantriebe 21 ist eine horizontal verlaufende Tragplatte 23 festgelegt, die wie der Kolben-Zylinder-Hubantrieb 21 Teil einer Halteeinrichtung 24 ist, mit der ein Oberband 25 oberhalb des Unterbandes 12 gehaltert ist. Diese Halterung ist derart, dass eine Verkippung der Normalen der Tragplatte 23 zur Längsachse des Kolbens 22 um einen bestimmten Winkel möglich ist.

Von einem Oberbandgehäuse 26 getragen ist eine im Wesentlichen horizontal verlaufende Gegenplatte 27. An dieser stützt sich ein darunter geführtes Untertrum 28 des Oberbandes 25 ab. Das Oberband 25 ist innerhalb des Oberbandgehäuses 26 über eine Antriebsrolle 29 und mehrere Umlenkrollen 30 geführt. Zwei der Umlenkrollen 30 bilden eine Band-Spanneinrichtung für das Oberband 25.

Das Oberband 25 ist unterteilt in insgesamt vier Ober-Einzelbänder 31 (vgl. Figl 3). Letztere verlaufen parallel zueinander benachbart. Alle Ober-Einzelbänder 31 sind gemeinsam von der Antriebsrolle 29 angetrieben. Jeweils zwischen zwei benachbarten Ober-Einzelbändern 31 ist im Bereich des Oberband-Untertrums 28 eine Führungsleiste 32 angeordnet. Zwei weitere Führungsleisten 32 begrenzen das Oberband-Untertrum 28 seitlich, sodass insgesamt fünf Führungsleisten 32 vorliegen. Ein typischer Abstand zwischen zwei benachbarten Führungsleisten 32 beträgt 135 mm.

Die Führungsleisten 32 erstrecken sich also in der Transport- bzw. Laufrichtung 17. Die Führungsleisten 32 erstrecken sich nach oben hin zwischen den Ober-Einzelbändern 31 durch die Ebene des Oberband-Untertrums 28 hindurch. Die der Tragplatte 23 zugewandte Stirnseite der Führungsleisten 32 weist eine Ausnehmung 33 für die Band-Spanneinrichtung für das Oberband 25 auf. Die gegenüberliegende, dem Unterband-Obertrum 16 zugewandte Auflage-Stirnseite 34 der Führungsleisten 32 ist gerade und plan ausgeführt, sodass die Führungsleisten 32 in Arbeitsposition des Langrollers 6 mit der gesamten Auflage-Stirnseite 34 auf dem Unterband-Obertrum 16 aufliegen. Die Führungsleisten 32 sind nicht starr mit dem Oberband-Gehäuse 26 verbunden, sondern in entsprechend ausgeformten Durchtrittsöffnungen der Gegenplatte 27 hubbeweglich ausgeführt. Dabei sind sie in nicht dargestellter Weise am Oberbandgehäuse 26 gegen ein Herausfallen nach unten gesichert. Diese Sicherung kann z. B. mit Hilfe einer Langloch-Schrauben-Paarung oder mehreren derartigen Paarungen erfolgen.

Angetrieben wird die Antriebsrolle 29 über einen Transmissionsriemen 35 und eine Transmissionsrolle 36 von einem Oberband-Antriebsmotor 37, der ebenfalls an der Tragplatte 23 festgelegt ist.

Der Kolben-Zylinder-Hubantrieb 21 dient zur Grobeinstellung der Höhe des Oberband-Untertrums 28 über dem Unterband-Obertrum 16 in der Arbeitsposition des Langrollers 6. In dieser Arbeitsposition begrenzen das Unterband-Obertrum 16 und das Oberband-Untertrum 28 einen Kanal, in dem auf Grund von Relativgeschwindigkeiten von Unterband 12 und Oberband 25 gegeneinander die Teigstücke 2 langgerollt werden. Dieser Kanal ist durch die Führungsleisten 32 in vier Teilkanäle unterteilt. Die in diesen Teilkanälen langgerollten Teiglinge 2 werden während des Langrollens von den Führungsleisten 32 seitlich geführt. Während des Langrollens schleifen die Auflage-Stirnseiten 34 der Führungsleisten 32 auf dem Unterband-Obertrum 16.

Auf Grund der seitlichen Führung durch die Führungsleisten 32 liegen die Teigstücke 2 am Ende des Langrollvorgangs mit exakt definierter Schlusslage vor. Damit ist auch eine definierte Übergabe der langgerollten Teigstücke 2 vom Langroller 6 an die Ablege-Vorrichtung 7 gewährleistet. Ein typischer Durchmesser der langgerollten Teigstücke 2 beträgt 70 mm.

Die Antriebsmotoren 15 und 37 sind drehzahlregelbar und drehrichtungsumkehrbar, sodass der Langroll-Prozess genau gesteuert werden kann. Die genaue Höhe des Untertrums 28 über dem Obertrum 16 sowie die Neigung des Untertrums 28 zum Obertrum 16 werden durch Distanzstifte 38 vorgegeben, welche fein höhenverstellbar im Grundgestell 10 gelagert sind. In der Arbeitsposition des Langrollers 6 stützt sich die Gegenplatte 27 an den freien oberen Enden der Distanzstifte 38 ab.

Auf Grund der Hubbeweglichkeit der Führungsleisten 32 zum Oberband-gehäuse 26 können die Führungsleisten 32 einer Abstandsverstellung zwischen Oberband-Untertrum 28 und Unterband-Obertrum 16 folgen, sodass sie bei jedem eingestellten Abstand mit ihren Auflage-Stirnseiten 34 an der Oberseite des Unterband-Obertrums 16 anliegen. Damit ist bei unterschiedlich eingestellter Höhe des Oberband-Untertrums 28 zum Unterband-Obertrum 16 gewährleistet, dass sich die Führungsleisten 32 vollständig zwischen der Unterseite des Oberband-Untertrums 28 und der Oberseite des Unterband-Obertrums 16 erstrecken. Bei jedem eingestellten Abstand ist daher eine Seitenführung der Teigstücke 2 durch die Führungsleisten 32 gegeben.

Der Kolben-Zylinder-Hubantrieb 21 kann pneumatisch, hydraulisch oder elektrisch betätigbar sein. Die Antriebsmotoren 15, 37 sind als Elektromotoren ausgeführt.

## Patentansprüche

1. Langroller (6) zum Langrollen von Teigstücken (2),
- mit einem Grundgestell (10),
- mit einer Abstützung (Platte 11),
- mit einem im Grundgestell (10) gelagerten, mit einem Obertrum (16) über die Abstützung (Platte 11) geführten Unterband (12), welches über eine Unterband-Antriebseinrichtung (15) angetrieben ist,
- mit einem Traggestell (18) zur Halterung eines mit einem Untertrum (28) in einer Arbeitsposition etwa parallel zum Unterband-Obertrum (16) verlaufenden Oberbandes (25), welches über mindestens eine Oberband-Antriebseinrichtung (37) in einer Transportrichtung (17) für Teigstücke (2) angetrieben ist, **dadurch gekennzeichnet, dass**
- zwischen dem Oberband-Untertrum (28) und dem Unterband-Obertrum (16) eine Mehrzahl von Führungsleisten (32) angeordnet ist, die sich
-- zueinander beabstandet parallel zur Transportrichtung (17) und
-- zwischen der Unterseite des Oberband-Untertrums (28) und der Oberseite des Unterband-Obertrums (16) erstrecken.

2. Langroller nach Anspruch 1, **dadurch gekennzeichnet, dass** das Oberband (25) unterteilt ist in eine Mehrzahl von im Bereich des Oberband-Untertrums (28) parallel zueinander benachbart laufenden Ober-Einzelbändern (31), wobei im Bereich des Oberband-Untertrums (28) jeweils zwischen zwei benachbarten Ober-Einzelbändern (31) eine Führungsleiste (32) angeordnet ist.

3. Langroller nach Anspruch 2, **dadurch gekennzeichnet, dass** alle Ober-Einzelbänder (31) von einer einzigen Oberband-Antriebseinrichtung (37) angetrieben sind.

4. Langroller nach Anspruch 2 oder 3, **dadurch gekennzeichnet, dass** die Führungsleisten (32) sich zwischen den Ober-Einzelbändern (31) durch die Ebene des Oberband-Untertrums (28) hindurch erstrecken.

5. Langroller nach einem der Ansprüche 1 bis 4, **dadurch gekennzeichnet, dass** das Oberband-Untertrum (28) und das Unterband-Obertrum (16) im Abstand zueinander verstellbar ausgeführt sind, wobei die Führungsleisten (32) relativ zum Oberband-Untertrum (28) derart hubbeweglich ausgeführt sind, dass sich die Führungsleisten (32) auch bei verschiedenen Abstands-Relativstellungen von Oberband-Untertrum (28) und Unterband-Obertrum (16) zwischen der Unterseite des Oberband-Untertrums (28) und der Oberseite des Unterband-Obertrums (16) erstrecken.

6. Langroller nach Anspruch 5, **dadurch gekennzeichnet, dass** die Führungsleisten (32) derart am Oberband-Traggestell (18) gehaltert sind, dass sie einer Abstandsverstellung zwischen Oberband-Untertrum (28) und Unterband-Obertrum (16) folgen können, wobei die Führungsleisten (32) mit ihrer dem Unterband-Obertrum (16) zugewandten Seite (34) an der Oberseite des Unterband-Obertrums (16) anliegen.
